(19) Europäisches Patentamt
European Patent Office
Office européen des brevets

(11) EP 0 424 545 B1

(12) **EUROPEAN PATENT SPECIFICATION**

(45) Date of publication and mention
of the grant of the patent:
**29.01.1997 Bulletin 1997/05**

(21) Application number: **90907420.5**

(22) Date of filing: **15.05.1990**

(51) Int Cl.6: **C12C 11/11**

(86) International application number:
**PCT/JP90/00610**

(87) International publication number:
**WO 90/14413 (29.11.1990 Gazette 1990/27)**

(54) **METHOD FOR PREPARING ALCOHOLIC BEVERAGES**

VERFAHREN ZUR HERSTELLUNG ALKOHOLISCHER GETRÄNKE

PROCEDE DE PRODUCTION DE BOISSONS ALCOOLIQUES

(84) Designated Contracting States:
**DE FR GB NL**

(30) Priority: **15.05.1989 JP 121164/89**

(43) Date of publication of application:
**02.05.1991 Bulletin 1991/18**

(73) Proprietor: **KIRIN BEER KABUSHIKI KAISHA**
**Chuo-Ku, Tokyo (JP)**

(72) Inventor: **MURAYAMA, Hiroshi**
**Kirin Beer Kabushiki Kaisha**
**Tokyo 150 (JP)**

(74) Representative: **Reichel, Wolfgang, Dipl.-Ing. et al**
**Reichel und Reichel**
**Parkstrasse 13**
**60322 Frankfurt (DE)**

(56) References cited:
**DD-A- 151 766          GB-A- 1 445 083**
**JP-A-60 214 873**

**Description**

FIELD OF THE ART

The present invention relates to a process for preparing alcoholic beverages comprising a step of heating a main fermentation liquor, and more particularly, to a process for preparing alcoholic beverages wherein diacetyl precursors contained in the main fermentation liquor are heated and the amount of the diacetyl and its precursors is thus reduced within a short period of time.

BACKGROUND ART

The process for producing alcoholic beverages comprises a step of the main fermentation in which a microorganism, particularly yeast, is added to a fermentation stock liquor which is an aqueous solution containing a substrate for the microorganism so that the fermentation proceeds together with the proliferation of the microorganism, and a step of the post fermentation which is conducted at a relatively low temperature and in which the fermentation proceeds without the proliferation of the microorganism. One of the principal objects of the post fermentation includes the consumption of the diacetyl compound, which will herein include collectively the diacetyl itself (vicinal diketone) and diacetyl precursors (acetohydroxy acid), which is produced irreversibly as a metabolite of yeast in the main fermentation thereby to mature the flavor of the alcoholic beverages.

The diacetyl compound produced in the main fermentation is, however, almost present as the diacetyl precursors in the fermentation liquor. On the other hand, yeast can decompose the diacetyl into odorless acetoin which is further converted into 2,3-butanediol, but it cannot decompose the diacetyl precursors. Moreover, the reaction for converting the diacetyl precursors into the diacetyl is a non-biological and pure chemical reaction. Therefore, the conventional post fermentation carried out at a relatively low temperature has a problem in that the diacetyl precursors are converted into diacetyl only at a low conversion rate, so that it takes a long period of time before the disappearance of the diacetyl compound.

From DD-A-0151 766 it is known that, for reducing the amount of diacetyl, the yeast concentration of young beer which was heated at 60 - 90°C for converting diacetyl precursors into diacetyl was controlled to be at a level of 1 to 5 x $10^6$ cells/ml in order to concurrently therewith cause decomposition of diacetyl contained in the beer biologically by the presence of yeast.

From GB-A-1 445 083 there is known a two-step process for reducing the amount of diacetyl which comprises heating young beer at a temperature no lower than 40°C thereby to convert , in a first step, diacetyl precursor into diacetyl, cooling the so treated young beer, and contacting, in a second step, the young beer cooled with yeast to biologically decompose the diacetyl into odorless products.

DISCLOSURE OF THE INVENTION

The present invention has been achieved on the observation that the conversion of the diacetyl precursors into the diacetyl by heating a fermentation liquor under a predetermined condition brings about, in one step and substantially in the absence of yeast, not only the decrease of the diacetyl precursor but also the decrease of the diacetyl whereby the amount of the diacetyl compound remarkably decreases when compared with the amount before heating. The object of the present invention is to provide a process for producing alcoholic beverages in which the amount of the diacetyl compound contained in the fermentation liquor is reduced, within a short period of time.

According to the invention there is provided a process for producing alcoholic beverages comprising heating a fermentation liquor which has been obtained by subjecting an aqueous solution which contains a substrate for a microorganism to fermentation with proliferation of the microorganism, said fermentation liquor containing diacetyl and a diacetyl precursor, the diacetyl and the diacetyl precursor in total being present in the fermentation liquor in a total amount before heating, said fermentation liquor having a dissolved oxygen concentration of less than 0.2 mg/l, said heating being conducted under conditions such that the fermentation liquor contains no or a small amount of yeast no higher than $10^6$ cells/ml and the concentration of the dissolved oxygen in the fermentation liquor is maintained at a level lower than 0.2 mg/l, said heating being conducted at a selected heating temperature within the range of 40 to 120°C for a heating time which is sufficient for reducing the quantity in the fermentation liquor of the total of the diacetyl and the precursor to a residual amount after heating which is less than the total amount before heating, with both the diacetyl and the diacetyl precursor being present in the fermentation liquor after heating in amounts which are reduced from amounts in which the diacetyl and diacetyl precursor were present in the fermentation liquor before heating, said heating being conducted for a time no shorter than that defined by a formula:

Heating time (hr) =

1n (amount of diacetyl precursor before heating/

selected residual amount of diacetyl precursor

after heating)

divided by K

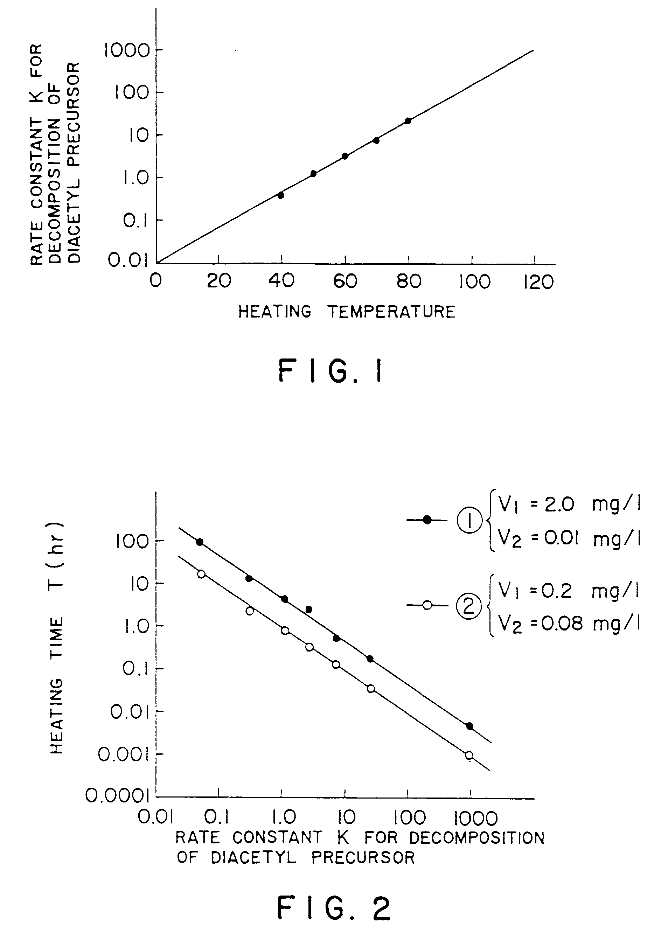

where K is a rate constant for conversion of diacetyl precursor into diacetyl which is obtained from the graph shown in Fig. 1 of the drawings illustrating the relationship between heating temperature and the rate constant for conversion of the diacetyl precursor into diacetyl and which is specific for said selected heating temperature.

According to the present invention, the amount of the diacetyl compound as one of the components which are contained in a fermentation liquor and give an unpleasant unmatured smell to alcoholic beverages is reduced appreciably by heating the fermentation liquor which has undergone main fermentation under the condition of a concentration of oxygen dissolved therein of less than 0,2 mg/lit. being maintained. The conventional process required for the disappearance of the diacetyl compound, that is, the post fermentation step, is not required, or alternatively, even if post fermentation is required, the diacetyl precursor in the fermentation liquor has been previously converted into the diacetyl and the diacetyl remains only in a very small amount, so that the diacetyl compound disappears in a very short time by the contact with yeast and therefore the period required for producing the alcoholic beverages can be substantially shortened.

DESCRIPTION OF THE DRAWINGS

Fig. 1 illustrates a relationship between the heating temperature T and the rate constant K for converting the diacetyl precursor into the diacetyl;

Fig. 2 illustrates the relationship between the rate constant K for converting the diacetyl precursor into the diacetyl and the period of heating T required for obtaining the amount of the diacetyl conversion V2 (mg/lit.) after the heating;

Fig. 3 is a diagram which illustrates a typical heating apparatus used in the present invention;

Fig. 4 illustrates a relationship between the concentration of dissolved oxygen and the decreasing rate of the diacetyl; and

Fig. 5 illustrates a relationship between the period of heating and the decreasing rate of the diacetyl.

BEST MODE FOR PRACTICING THE INVENTION

The fermentation liquor as the object of the present invention is a fermentation liquor which has undergone a main fermentation such that a microorganism, particularly yeast, is added to a fermentation stock liquor as a substrate for the microorganism so that the fermentation proceeds together with the proliferation of the microorganism.

The substrate for microorganisms is generally sugar, and is wort (which may have hops added) when the alcoholic drink to be produced is beer, and is obtained by saccharification of starches of barley and/or wheat with an enzyme of the malt thereof, and is a fruit juice when the alcoholic beverage to be produced is wine, particularly a grape juice.

A typical microorganism for the alcoholic fermentation of such a substrate is yeast. The typical beer yeast is the one of Saccharomyces, for example, Saccharomyces cerevisiae.

The concentration of the microorganism in the fermentation liquor is not higher than $10^6$ cells/ml. Higher microorganism concentration than $10^6$ cells/ml, is not desirable since the microorganism components are transferred into the fermentation liquor by heating.

The heating of the fermentation liquor of the present invention requires the condition that the dissolved oxygen concentration be maintained at a level lower than 0,2 mg/lit. If the dissolved oxygen concentration is in the range of 0,2 mg/lit. or more, the amount of the diacetyl precursors contained as the precursor in the fermentation liquor will not be reduced in a short time, and no advantages inherent in the present invention will not be attained. In this connection, the means for establishing and maintaining the dissolved oxygen concentration at a level of less than 0,2 mg/lit. of the fermentation liquor is not especially limited. Generally, the fermentation liquor in which the main fermentation has been completed is in an anaerobic state (generally in 0.1 mg/lit. or less) due to the aspiration effect of the yeast, and the aforementioned level of the dissolved oxygen concentration can be maintained by preventing the fermentation liquor from contact with oxygen. The dissolved oxygen concentration is preferably substantially zero.

The dissolved oxygen concentration in the fermentation liquor is determined by a conventional dissolved oxygen meter such as Model 58 manufactured by Yellow Springs Instrument Co., Inc. Yellow Springs, Ohio, U.S.A.

Heating of the fermentation liquor is conducted under the conditions of a temperature and a duration of time sufficient enough for reducing the concentration of the total of diacetyl and the diacetyl precursors to a level significantly lower than that before the heating. In view of this, the heating temperature of the fermentation liquor is appropriately determined in the range of 40 to 120°C. Heating at a temperature lower than 40°C will cause the problem that the renewed production of the diacetyl precursor or the fermentation are promoted. Heating at a temperature higher than 120°C will cause the problem that insoluble proteinous products generated by heat will impair the quality of the alcoholic beverage produced.

The minimum requisite heating time at the heating temperature determined from the aforementioned temperature range can be determined corresponding to the amount of the diacetyl precursor in the fermentation liquor. That is to say, the relationship (correlation-1) between the heating temperature T in the heating temperature range of 40 to 120°C and the rate constant for converting the diacetyl precursor into the diacetyl is obtained (Fig. 1). Next, the combination (V1, V2) of the content, V1 (mg/lit.), of the diacetyl precursor in the fermentation liquor before heating and the objective or desired value, V2 (mg/lit.), of the residual amount of the diacetyl precursor after heating are determined. For example, the combination (V1, V2) is determined as shown in (i) or (ii) below:

(i) V1 = 2.0 mg/lit., V2 = 0.01 mg/lit.;
(ii) V1 = 0.2 mg/lit., V2 = 0.08 mg/lit.

Then, for the given combination (V1, V2) thus determined, the relationship (correlation-2) between the rate constant K of conversion and the heating time t for obtaining the objective value V2 (mg/lit.) the residual amount of the diacetyl precursor after heating is determined (Fig. 2). From these relationships, when the heating temperature T is determined at a level within the range of 40 to 120°C, the rate constant K of conversion corresponding to the heating temperature T is then obtained from the correlation-1 (Fig. 1), and the content V1 of the diacetyl precursor in the fermentation liquor before heating is then measured and the objective value V2 of the desired residual amount of the diacetyl precursor after heating is chosen to determine the combination (V1, V2), and the heating time t corresponding to the aforementioned rate constant K of conversion is then determined from the correlation-2 (Fig. 2). The requisite minimal heating time t is determined within the range of 0.003 to 100 hours. In this connection, the conversion reaction of the diacetyl precursor into diacetyl is of the first order, so that the rate constant K for conversion of the diacetyl precursor into diacetyl can be obtained by dividing, by the predetermined heating time, the natural logarithm of the value obtained by dividing the amount of the diacetyl precursor before heating by the amount of the diacetyl precursor after heating at the predetermined temperature as shown in the following equation:

$$K = \ln (\text{Acetohydroxy acid before heating/Residual}$$

$$\text{acetohydroxy acid})/\text{Predetermined heating time}$$

$$(hr)$$

The pressure on the heating of the fermentation liquor may be any pressures so that foaming by carbon dioxide gas of the fermentation liquor will not take place during heating, or the heating may also be carried out without pressurizing. In the case of the heating without pressurizing, the heating efficiency decreases due to the foaming by the carbon dioxide gas, but the effect of the present invention will not be varied.

The heating is carried out with any apparatuses which can heat the whole fermentation liquor at a predetermined temperature for a predetermined time. The heating apparatus may be specifically the one based on the principle of a heat exchanger.

EXAMPLES

The present invention is further described in detail with reference to the examples of the present invention below.

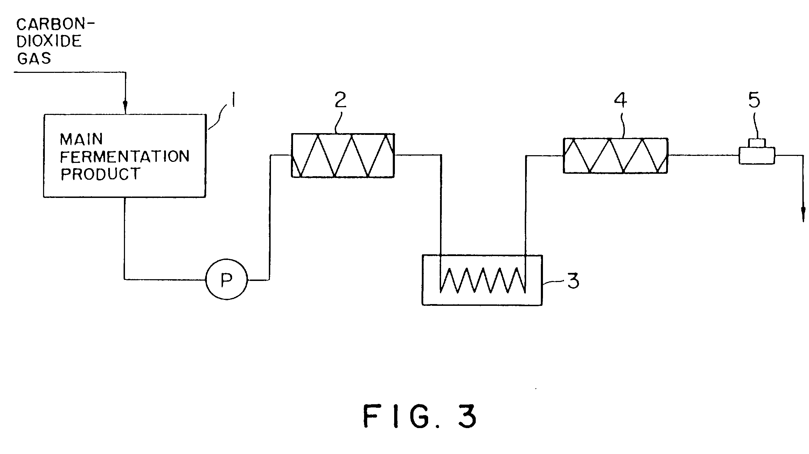

The heating of the fermentation liquor was conducted with an apparatus illustrated in Fig. 3. In Fig. 3, the fermentation liquor in the main fermentation tank 1 in which the dissolved oxygen concentration is maintained at a level of less than 0,2 mg/lit. while carbon dioxide gas is introduced into the main fermentation tank 1 is pumped through the pre-heating apparatus 2 into the heating apparatus 3. Within the heating apparatus 3, the fermentation liquor is subjected to heating treatment at a predetermined temperature for a predetermined time, then cooled through the cooling apparatus 4, and taken out through the pressure controlling valve 5.

Example 1

A fermentation liquor which was obtained by the fermentation of wort by a beer yeast, <u>Saccharomyces cerevisiae</u>, namely the main fermentation liquor which had undergone fermentation with proliferation of the yeast taking place, was supplied into a heating apparatus 3 while the fermentation liquor was maintained in an anaerobic state at a dissolved oxygen concentration of 0.1 mg/lit. The content in the fermentation liquor of the diacetyl precursor was determined to be 0.5 mg/lit., and at the heating temperature of 70°C and at the aimed residual amount of the diacetyl precursor after heating of 0.08 mg/lit, the requisite minimal heating time obtained from Figs. 1 and 2 was about 13 minutes. Thus, heating was conducted without pressurizing for 40 minutes at the temperatures of 70°C and 80°C, respectively, and then cooling conducted whereby samples (Sample 1 and 2) were obtained.

As shown in Table 1, the content of the diacetyl precursor in the fermentation liquor before heating which was 0.5 mg/lit. was reduced to 0.1 mg/lit. after heating at 70°C (Sample 1) and to 0.07 mg/lit. after heating at 80°C (Sample 2).

Table 1

| Sample | Heating condition | Content of diacetyl precursor before heating (mg/lit.) | Content of diacetyl compound after heating (mg/lit.) |
|---|---|---|---|
| Sample 1 | Without pressurizing, 70°C, 40 min | 0.5 | 0.1 |
| Sample 2 | Without pressurizing, 80°C, 40 min | 0.5 | 0.07 |

Example 2

A fermentation liquor which was obtained by the fermentation of a wort by a beer yeast, <u>Saccharomyces cerevisiae</u>, namely the main fermentation liquor, was supplied into a heating apparatus 3 while the fermentation liquor was maintained in an anaerobic state at a dissolved oxygen concentration of 0.1 mg/lit. The requisite minimal heating time (14 minutes) was obtained in the same manner as in Example 1, and heating was conducted at the temperatures of 70°C for 40 minutes under the pressure of 7 $kg/cm^2$ in order to suppress the foaming by carbon dioxide gas. Then the cooling of the fermentation liquor gave a sample (Sample 3).

As shown in Table 2, the content of the diacetyl precursor in the fermentation liquor before heating which was 0.55 mg/lit. was reduced to 0.13 mg/lit. after heating.

Table 2

| Sample | Heating condition | Content of diacetyl precursor before heating (mg/lit.) | Content of diacetyl compound after heating (mg/lit.) |
|---|---|---|---|
| Sample 3 | 7 $kg/cm^2$, 70°C, 40 min | 0.55 | 0.13 |

Example 3

A fermentation liquor which was obtained by the fermentation of a wort by a beer yeast, <u>Saccharomyces cerevisiae</u>, namely the main fermentation liquor, was supplied into a heating apparatus 3 while the fermentation liquor was maintained in an anaerobic state at a dissolved oxygen concentration of 0.1 mg/lit. The requisite minimal heating times (2 - 42 minutes) were obtained in the same manner as in Example 1, and the fermentation liquor was heated under various heating conditions (temperature, time and pressure) and then cooled to give samples (Samples 4 - 7).

As shown in Table 3, it was apparent that the contents of the diacetyl compound in the fermentation liquor were decreased after heating under either set of heating conditions, and that for the substantially the same content of the diacetyl compound in the fermentation liquor before heating, the same effect was obtained in a shorter heating time at a higher heating temperature.

Table 3

| Sample | Heating condition | Content of diacetyl precursor before heating (mg/lit.) | Content of diacetyl compound after heating (mg/lit.) |
|---|---|---|---|
| Sample 4 | 6 $kg/cm^2$, 60°C, 60 min | 0.81 | 0.21 |
| Sample 5 | 7 $kg/cm^2$, 70°C, 30 min | 1.14 | 0.45 |

Table 3   (continued)

| Sample | Heating condition | Content of diacetyl precursor before heating (mg/lit.) | Content of diacetyl compound after heating (mg/lit.) |
|---|---|---|---|
| Sample 6 | 8 kg/cm$^2$, 80°C, 15 min | 1.62 | 0.26 |
| Sample 7 | 9 kg/cm$^2$, 90°C, 5 min | 1.62 | 0.21 |

Example 4

A fermentation liquor which was obtained by the fermentation of a wort by a beer yeast, Saccharomyces cerevisiae, namely the main fermentation liquor, was supplied into a heating apparatus 3 at various dissolved oxygen concentrations. The requisite minimal heating time (20 minutes) was obtained in the same manner as in Example 1, and the fermentation liquor was subjected to heating treatment without pressurizing at a heating temperature of 70°C for a heating time of 40 minutes and then cooled to give a sample.

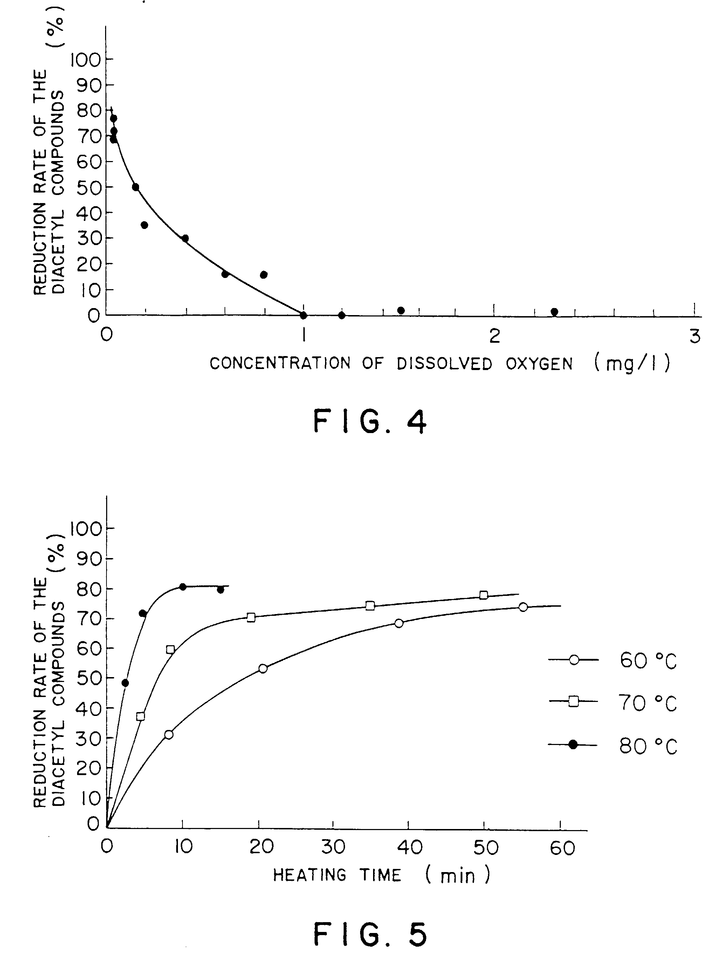

As shown in Fig. 4, a significant effect was observed such that the contents of the diacetyl compound in the fermentation liquor were decreased at a dissolved oxygen concentration of less than 0,2 mg/lit., and it was desirable to reduce the dissolved oxygen concentration to 0.1 mg/lit. for obtaining a greater effect.

Example 5

A fermentation liquor which was obtained by the fermentation of a wort by a beer yeast, Saccharomyces cerevisiae, namely the main fermentation liquor, was supplied into a heating apparatus 3 while the fermentation liquor was maintained in an anaerobic state at a dissolved oxygen concentration of 0.1 mg/lit. The fermentation liquor was subjected to heating treatment for various heating times at three levels of heating temperature (60°C, 70°C and 80°C) and then cooled to give samples.

As shown in Fig. 5, it was apparent that for substantially the same diacetyl content in the fermentation liquor before heating, the same effect was obtained in a shorter heating time at a higher heating temperature.

INDUSTRIAL APPLICABILITY

As it is possible according to the present invention to reduce the content of diacetyl which has come from the main fermentation liquor and gives an unpleasant smell to alcoholic beverages by heating the main fermentation liquor for a short time, the post fermentation conventionally carried out at a low temperature for a long time in order to lower the content of diacetyl can be made unnecessary or simplified. Accordingly, the present invention has a large industrial applicability in view that the present invention can greatly shorten the time for producing alcoholic beverages.

**Claims**

1. A process for producing alcoholic beverages comprising heating a fermentation liquor which has been obtained by subjecting an aqueous solution which contains a substrate for a microorganism to fermentation with proliferation of the microorganism, said fermentation liquor containing diacetyl and a diacetyl precursor, the diacetyl and the diacetyl precursor in total being present in the fermentation liquor in a total amount before heating, said fermentation liquor having a dissolved oxygen concentration of less than 0.2 mg/l, said heating being conducted under conditions such that the fermentation liquor contains no or a small amount of yeast no higher than $10^6$ cells/ml and the concentration of the dissolved oxygen in the fermentation liquor is maintained at a level lower than 0.2 mg/l, said heating being conducted at a selected heating temperature within the range of 40 to 120°C for a heating time which is sufficient for reducing the quantity in the fermentation liquor of the total of the diacetyl and the precursor to a residual amount after heating which is less than the total amount before heating, with both the diacetyl and the diacetyl precursor being present in the fermentation liquor after heating in amounts which are reduced from amounts in which the diacetyl and diacetyl precursor were present in the fermentation liquor before heating, said heating being conducted for a time no shorter than that defined by a formula:

Heating time (hr) =

1n (amount of diacetyl precursor before heating/

6

EP 0 424 545 B1

selected residual amount of diacetyl precursor

after heating)

divided by K

where K is a rate constant for conversion of diacetyl precursor into diacetyl which is obtained from the graph shown in Fig. 1 of the drawings illustrating the relationship between heating temperature and the rate constant for conversion of the diacetyl precursor into diacetyl and which is specific for said selected heating temperature.

2. A process for producing alcoholic beverages comprising a main fermentation step and a post fermentation step, wherein an aqueous solution which contains a substrate for a microorganism is subjected to fermentation with proliferation of the microorganism in the main fermentation step resulting in production of a fermentation liquor containing diacetyl and diacetyl precursors, wherein said fermentation liquor is heated in a heating step to convert at least some of said diacetyl precursors to diacetyl prior to said post fermentation step, and wherein the diacetyl is substantially eliminated in the post fermentation step by contacting the diacetyl with said microorganism, the improvement comprising conducting said heating step under conditions such that the fermentation liquor contains no or a small amount of yeast no higher than $10^6$ cells/ml and the fermentation liquor has a concentration of dissolved oxygen which is maintained at less than 0.2 mg/l, and conducting said heating at a selected heating temperature with the range of 40 to 120°C for a heating time which is sufficient for reducing the total quantity in the fermentation liquor of both the diacetyl and the diacetyl precursors.

3. A process as claimed in claim 2 wherein the heating is conducted for a time no shorter than that defined by a formula:

Heating time (hr) =

1n (amount of diacetyl precursor before heating/selected

residual amount of diacetyl precursor after heating)

divided by K

where K is a rate constant for conversion of diacetyl precursor into diacetyl which is obtained from the graph shown in Fig. 1 of the drawings illustrating the relationship between heating temperature and the rate constant for conversion of the diacetyl precursor into diacetyl and which is specific for said selected heating temperature.

**Revendications**

1. Procédé de production de boissons alcoolisées, qui comprend l'étape consistant à chauffer une liqueur de fermentation, que l'on a obtenue en soumettant une solution aqueuse contenant un substrat pour un micro-organisme à une fermentation, avec prolifération du micro-organisme, ladite liqueur de fermentation contenant du diacétyle et un précurseur du diacétyle, le diacétyle et le précurseur du diacétyle étant en totalité présents dans la liqueur de fermentation en une quantité totale avant le chauffage, ladite liqueur de fermentation ayant une teneur en oxygène dissous inférieure à 0,2 mg/l, ledit chauffage étant effectué dans des conditions telles que la liqueur de fermentation ne contienne pas, ou contienne une petite quantité de levure, non supérieure à $10^6$ cellules/ml, et que la concentration de l'oxygène dissous dans la liqueur de fermentation soit maintenue à une valeur inférieure à 0,2 mg/l, ledit chauffage étant effectué à une température de chauffage sélectionnée dans l'intervalle de 40 à 120°C, pendant un temps de chauffage qui est suffisant pour réduire la quantité, dans la liqueur de fermentation, de la somme du diacétyle et du précurseur jusqu'à une quantité résiduelle après chauffage, qui est inférieure à la quantité totale avant chauffage, tant le diacétyle que le précurseur de diacétyle étant présents dans la liqueur de fermentation après chauffage, en des quantités qui sont réduites par rapport aux quantités en lesquelles le diacétyle et le précurseur de diacétyle étaient présents dans la liqueur de fermentation avant le chauffage, ledit chauffage étant effectué pendant un laps de temps qui n'est pas plus court que celui qui est défini par la formule suivante :

7

temps de chauffage (h) =

1n (quantité de précurseur de diacétyle avant

chauffage/quantité résiduelle sélectionnée du

précurseur de diacétyle après chauffage),

divisé par K

où K est une constante de vitesse pour ce qui est de laconversion du précurseur de diacétyle en diacétyle, et que l'on obtient à partir du graphique présenté sur la figure 1 des dessins, qui illustre la relation entre la température de chauffage et la constante de vitesse correspondant à la conversion du précurseur de diacétyle en diacétyle, et qui est spécifique de ladite température de chauffage sélectionnée.

2. Procédé de production de boissons alcoolisées, comprenant une étape de fermentation principale et une étape de post-fermentation, dans lequel une solution aqueuse contenant un substrat pour un micro-organisme est soumise à une fermentation avec prolifération du micro-organisme dans l'étape de fermentation principale, ce qui conduit à la production d'une liqueur de fermentation contenant du diacétyle et des précurseurs du diacétyle, dans lequel ladite liqueur de fermentation est chauffée dans une étape de chauffage pour convertir au moins une partie desdits précurseurs de diacétyle en diacétyle avant ladite étape de post-fermentation, et dans lequel le diacétyle est presque complètement éliminé dans l'étape de post-fermentation par mise en contact du diacétyle avec ledit micro-organisme, l'amélioration comprenant la mise en oeuvre de ladite étape de chauffage dans des conditions telles que la liqueur de fermentation ne contienne pas, ou contienne une petite quantité de levure, non supérieure à $10^6$ cellules/ml, et que la liqueur de fermentation ait une teneur en oxygène dissous qui se maintienne à de 0,2 mg/l, et à effectuer ledit chauffage à une température de chauffage sélectionnée dans l'intervalle de 40 à 120°C, pendant un temps de chauffage qui est suffisant pour réduire la quantité totale, dans la liqueur de fermentation, tant du diacétyle que des précurseurs du diacétyle.

3. Procédé selon la revendication 2, dans lequel le chauffage est effectué pendant un laps de temps qui n'est pas plus court que celui qui est défini par la formule suivante :

temps de chauffage (h) =

1n (quantité de précurseur de diacétyle avant

chauffage/quantité résiduelle sélectionnée du

précurseur de diacétyle après chauffage),

divisé par K

où K est une constante de vitesse pour ce qui est de la conversion du précurseur de diacétyle en diacétyle, et que l'on obtient à partir du graphique présenté sur la figure 1 des dessins, qui illustre la relation entre la température de chauffage et la constante de vitesse correspondant à la conversion du précurseur de diacétyle en diacétyle, et qui est spécifique de ladite température de chauffage sélectionnée.

**Patentansprüche**

1. Verfahren zur Herstellung alkoholischer Getränke, bei dem man eine Gärflüssigkeit erhitzt, die dadurch erhalten worden ist, daß man eine wässrige Lösung mit einem Gehalt an einem Substrat für einen Mikroorganismus der Gärung und der Vermehrung des Mikroorganismus unterzogen hat, wobei die Gärflüssigkeit Diazetyl und einen Diazetylvorläufer enthält, daß Diazetyl und der Diazetylvorläufer insgesamt vor dem Erhitzen in der Gärflüssigkeit in einer Gesamtmenge vorhanden sind und die Gärflüssigkeit eine Konzentration an gelöstem Sauerstoff von unter 0,2 mg/l aufweist, wobei ferner das Erhitzen unter derartigen Bedingungen durchgeführt wird, daß die Gärflüssigkeit keine Hefe oder nur eine geringe Menge von nicht über $10^6$ Zellen/ml enthält und die Konzentration an gelöstem Sauerstoff in der Gärflüssigkeit auf einem Wert von unter 0,2 mg/l gehalten wird, und das Erhitzen bei einer innerhalb des Bereiches von 40 bis 120°C ausgewählten Temperatur während einer Zeitdauer durchgeführt wird, die ausreicht, um die Gesamtmenge aus Diazetyl und Vorläufer in der Gärflüssigkeit auf einen nach dem Erhitzen erhaltenen Restwert zu senken, der unter der vor dem Erhitzen vorhandenen Gesamtmenge liegt, wobei sowohl das Diazetyl als auch der Diazetylvorläufer nach dem Erhitzen in der Gärflüssigkeit in Mengen vorliegen, die gegenüber den Mengen, in denen das Diazetyl und der Diazetylvorläufer vor dem Erhitzen in der Gärflüssigkeit vorhanden waren, verringert sind, und daß das Erhitzen während einer Zeitdauer durchgeführt wird, die nicht kürzer ist als diejenige, die durch folgende Formel definiert wird:

$$\text{Erhitzungsdauer (Stunden)} = \frac{\ln(\text{Menge an Diazetylvorläufer vor dem Erhitzen/ ausgewählte Restmenge an Diazetylvorläufer nach dem Erhitzen})}{K},$$

worin K eine Geschwindigkeitskonstante für die Umwandlung von Diazetylvorläufer in Diazetyl ist, die von der in Fig. 1 der Zeichnungen dargestellten Kurve erhalten wird, die die Beziehung zwischen der Erhitzungstemperatur und der Geschwindigkeitskonstante für die Umwandlung von Diazetylvorläufer in Diazetyl erläutert und für die ausgewählte Erhitzungstemperatur spezifisch ist.

2. Verfahren zur Herstellung alkoholischer Getränke mit einem Hauptgärungsschritt und einem Nachgärungsschritt, wobei eine wässrige Lösung mit einem Gehalt an einem Substrat für einen Mikroorganismus in dem Hauptgärungsschritt der Gärung und der Vermehrung des Mikroorganismus unterworfen wird, was zur Erzeugung einer Gärflüssigkeit mit einem Gehalt an Diazetyl und Diazetylvorläufern führt, wobei die Gärflüssigkeit in einem Erhitzungsschritt erhitzt wird, um mindestens einen Teil der Diazetylvorläufer vor dem Nachgärungsschritt in Diazetyl umzuwandeln, und wobei das Diazetyl in dem Nachgärungsschritt im wesentlichen eliminiert wird, indem man das Diazetyl mit dem Mikroorganismus in Berührung bringt, dadurch gekennzeichnet, daß man den Erhitzungsschritt unter solchen Bedingungen ablaufen läßt, daß die Gärflüssigkeit keine Hefe oder nur eine geringe Menge von nicht mehr als $10^6$ Zellen/ml enthält und eine Konzentration an gelöstem Sauerstoff aufweist, die bei weniger als 0,2 mg/l gehalten wird, und das Erhitzen bei einer im Bereich von 40 bis 120°C ausgewählten Temperatur während einer Zeitdauer durchführt, die ausreicht, um die Gesamtmenge an sowohl Diazetyl als auch Diazetylvorläufern in der Gärflüssigkeit zu verringern.

3. Verfahren gemäß Anspruch 2, wobei das Erhitzen während einer Zeitdauer durchgeführt ist, die nicht kürzer ist als die in der folgenden Formel definierte:

$$\text{Erhitzungsdauer (Stunden)} = \frac{\ln(\text{Menge an Diazetylvorläufer vor dem Erhitzen/ ausgewählte Restmenge an Diazetylvorläufer nach dem Erhitzen})}{K},$$

worin K eine Geschwindigkeitskonstante für die Umwandlung von Diazetylvorläufer in Diazetyl ist, die von der in Fig. 1 der Zeichnungen dargestellten Kurve erhalten wird, die die Beziehung zwischen der Erhitzungstemperatur und der Geschwindigkeitskonstante für die Umwandlung von Diazetylvorläufer in Diazetyl erläutert und für die ausgewählte Erhitzungstemperatur spezifisch ist.

F I G. I

F I G. 2

F I G. 3

F I G. 4

F I G. 5